# EUROPÄISCHE PATENTSCHRIFT

(11) **EP 1 866 543 B1**
(45) Veröffentlichungstag und Bekanntmachung des Hinweises auf die Patenterteilung: **16.05.2012**
(21) Anmeldenummer: 06704743.1
(22) Anmeldetag: 09.03.2006
(51) Int. Cl.: F03D 7/04

(54) **VERFAHREN UND VORRICHTUNG ZUM ABBREMSEN DES ROTORS EINER WINDKRAFTANLAGE**
METHOD AND DEVICE FOR BRAKING THE ROTOR OF A WIND ENERGY PLANT
PROCÉDÉ ET DISPOSITIF PERMETTANT DE FAIRE FREINER LE ROTOR D'UNE ÉOLIENNE

(30) Priorität: 18.03.2005 AT 4682005
(43) Veröffentlichungstag der Anmeldung: 19.12.2007
(60) Teilanmeldung: 08015451.1
(73) Patentinhaber: AMSC Windtec GmbH, 9020 Klagenfurt (AT)
(72) Erfinder: HEHENBERGER, Gerald, 9020 Klagenfurt (AT)
(74) Vertreter: Isarpatent
(86) Internationale Anmeldenummer: PCT/AT2006/000101
(87) Internationale Veröffentlichungsnummer: WO 2006/096895

(56) Entgegenhaltungen:
- EP-A- 0 094 106
- EP-A- 0 942 168
- EP-A- 1 128 064
- WO-A-99/23384
- WO-A-03/019005
- WO-A-03/091570
- DE-U1- 29 722 109
- PATENT ABSTRACTS OF JAPAN Bd. 009, Nr. 176 (M-398), 20. Juli 1985 (1985-07-20) & JP 60 045787 A (MATSUSHITA SEIKO KK), 12. März 1985 (1985-03-12)

## Beschreibung

Die Erfindung betrifft eine Vorrichtung zum Abbremsen von an einer Rotornabe einer Windkraftanlage drehbar gelagerten Rotorblättern, mit elektrischen Einrichtungen in der Rotornabe, wie einem Antrieb zum Verdrehen der Rotorblätter, mit einer mit den Rotorblättern verbundenen Sperre, die bei Ausfall der Leistungsversorgung des Antriebes oder des Antriebes selbst aktivierbar ist, und welche im aktivierten Zustand ein Verdrehen der Rotorblätter in die Betriebsstellung verhindert, mit einer Rotorbremse und mit einer Notstromversorgung.

Die Erfindung betrifft des Weiteren ein Verfahren zum Abbremsen eines Rotors einer Windkraftanlage mit am Rotor drehbar gelagerten Rotorblättern, mit elektrischen Einrichtungen in der Rotornabe, wie einem Antrieb zum Verdrehen der Rotorblätter, und mit einer mit den Rotorblättern verbundenen Sperre, die bei Ausfall der Leistungsversorgung des Antriebes oder des Antriebes selbst aktivierbar ist, und welche im aktivierten Zustand ein Verdrehen der Rotorblätter in die Betriebsstellung verhindert,

Eine derartige Vorrichtung ist aus der WO 99/23384 A1 bekannt. Bei dieser Vorrichtung ist zum Abbremsen der Anlage eine Sperre an der Rotorblattverstellung vorgesehen, die bei Ausfall der Leistungsversorgung aktiviert wird, wodurch sich die Rotorblätter nur mehr in die Segelstellung drehen können und in dieser gehalten werden bis die Anlage zum Stillstand gekommen und die Leistungsversorgung wieder hergestellt ist. Wenngleich diese Vorrichtung ein sicheres Abbremsen der Anlage bei einem Ausfall der Leistungsversorgung gewährleistet, stellt es einen Nachteil dar, dass für ein zuverlässiges Funktionieren dieser Vorrichtung eine relativ große Pfeilung, d.h. ein Winkel zwischen der Längsachse des Rotorblattes und dessen Drehachse, erforderlich ist, wenn auch in ungünstigsten Fällen die Rotorblätter ohne Antrieb, der wiederum eine Notstromversorgung benötigen würde, in die Segelstellung gedreht werden sollen. Eine große Pfeilung verursacht nämlich auch große Lasten im Normalbetrieb, was den Einsatz größerer Verstellantriebe für die Rotorblätter erfordert. Dies führt in weiterer Folge zu höheren Installationskosten und einem höheren Energieverbrauch und verschlechtert die Dynamik der Antriebe durch höhere Massenträgheit der Antriebe. Zusammenfassend tritt daher bei der Vorrichtung gemäß der WO 99/23384 A1 entweder der Nachteil höherer Installations- und Betriebskosten durch eine große Pfeilung oder der Notwendigkeit von Batterien in der Nabe zum Unterstützen des Zurückdrehens der Rotorblätter in die Segelstellung durch die Rotorblattantriebe auf.

Der Erfindung liegt daher die Aufgabe zu Grunde eine Vorrichtung der eingangs genannten Art zur Verfügung zu stellen, bei der das Abbremsen des Rotors auch dann zuverlässig funktioniert, wenn keine Pfeilung oder nur eine geringe Pfeilung vorhanden und keine eigene Notstromversorgung für jeden Antrieb jedes Rotorblattes vorgesehen sind.

Gelöst wird dies Aufgabe mit der Vorrichtung mit den Merkmalen des Anspruches 1.

Der Erfindung liegt des Weiteren die Aufgabe zu Grunde ein Verfahren zum Abbremsen eines Rotors einer Windkraftanlage zur Verfügung zu stellen, bei dem in analoger Weise zur erfindungsgemäßen Vorrichtung keine oder eine geringe Pfeilung und auch keine eigene Notstromversorgung für jeden Antrieb jedes Rotorblattes erforderlich sind.

Gelöst wird diese Aufgabe mit einem Verfahren mit den Merkmalen des Anspruches 7.

Die Erfindung verwendet die bei Windkraftanlagen an sich immer vorhandene Rotorbremse, die jedoch nach den einschlägigen Vorschriften nur als Festhaltebremse bei der Wartung der Windkraftanlage oder als Notbremse bei Ausfall einer Anlagenkomponente verwendet wird, in Verbindung mit der Sperre zum Verdrehen der Rotorblätter in die Segelstellung. Die Erfindung macht sich dabei zu Nutze, dass durch den Einsatz der Rotorbremse ein Drehmoment auf die Rotorblätter wirkt, welches diese in die Segelstellung dreht. Gleichzeitig wirken auf die Rotorblätter die Schwerkraft und Windkräfte, welche ein Verdrehen der Rotorblätter in die Segelstellung unterstützen. Durch die Kombination all dieser Merkmale kann ein äußerst rasches und sicheres Verdrehen der Rotorblätter in die Segelstellung bewirkt werden, ohne dass eine große Pfeilung oder eine Unterstützung durch die Rotorblattantriebe mit einer dadurch notwendigen, redundanten Notstromversorgung in Form von Batterien erforderlich ist. Die Versorgung der in der Nabe angeordneten elektrischen Einrichtungen, wie der Antriebe zum Verdrehen der Rotorblätter, kann ausschließlich über eine elektrische Drehverbindung, wie Schleifringe, an der Rotorwelle erfolgen, wobei eine Notstromversorgung außerhalb der Nabe, z.B. in der Gondel oder im Turm der Windkraftanlage, beispielsweise bei kurzen Netzunterbrechungen, die kontinuierliche Versorgung der Verstellantriebe gewährleistet und die Anlage immer geregelt abgestellt werden kann. Sollte allerdings z.B. bei Ausfall der Notstromversorgung, des Schleifringes, irgend einer Verbindungsleitung oder des Antriebes eine Notabschaltung erforderlich sein, sorgt das Bremsmoment der Rotorbremse in Verbindung mit der Massenträgheit der Rotorblätter für ein rasches und zuverlässiges Drehen der Rotorblätter in die Segelstellung und somit eine sichere Abschaltung der Anlage.

Da in der sich drehenden Rotornabe keine redundante Notstromversorgung mehr erforderlich ist, sondern diese außerhalb der Nabe angeordnet sein kann, welche Notstromversorgung für die Steuerung der Anlage ohnedies erforderlich ist, ergeben sich letztlich auch geringere Anlage bzw. Wartungskosten.

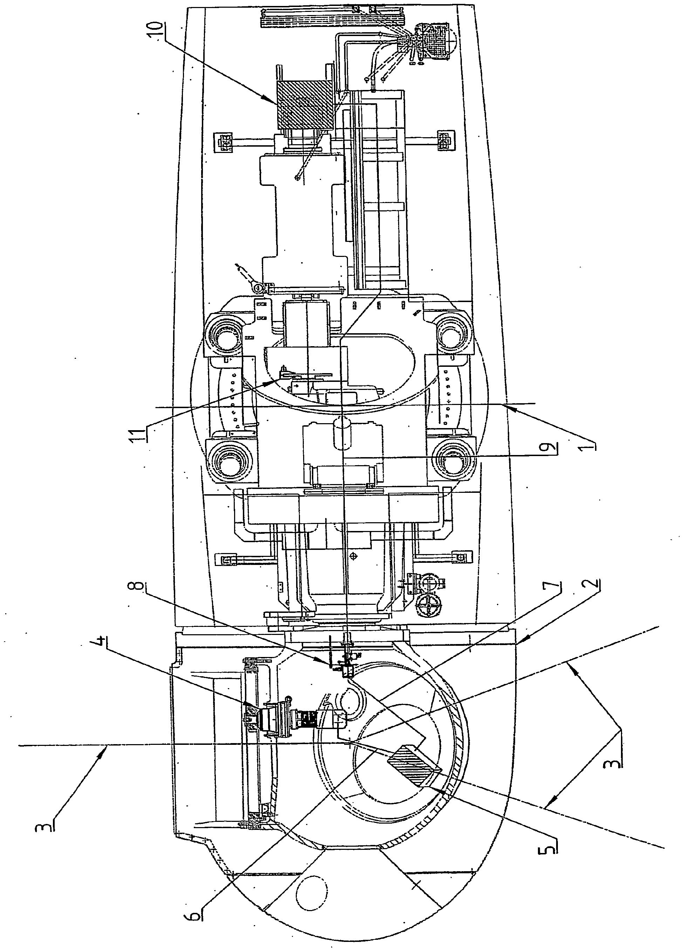

Weitere Merkmale und Vorteile der Erfindung ergeben sich aus der nachfolgenden Beschreibung eines Ausführungsbeispiels der Erfindung unter Bezugnahme auf die beiliegende Zeichnung.

In der Zeichnung ist schematisch eine Gondel 1 einer Windkraftanlage dargestellt, an der eine Nabe 2 drehbar gelagert ist. An der Nabe 2 sind durch ihre Drehachsen symbolisch dargestellte Rotorblätter 3 drehbar gelagert. Zum Verdrehen der Rotorblätter 3 ist jeweils ein Antrieb bestehend aus Motor 4 und Frequenzumrichter 5 je Rotorblatt 3 vorgesehen. Jeder Motor 4 ist mit einer Sperre ausgestattet, die im aktivierten Zustand ein Verdrehen der Rotorblätter 3 in die Betriebsstellung verhindert, aber ein kontinuierliches oder diskontinuierliches Verdrehen der Rotorblätter 3 in die Segelstellung zulässt. Im nicht aktivierten Zustand ist die Sperre inaktiv, d.h. ein Verdrehen der Rotorblätter 3 in alle Richtungen ist möglich. Die Sperre kann z. B. wie in der WO 99/23384 A1 beschrieben aufgebaut sein und funktionieren. Die Sperre kann aber auch so ausgelegt sein, dass sie lediglich die Rotorblätter 3 in der Segelstellung fängt und verhindert, dass sie sich wieder in die Betriebsstellung drehen.

Jeder Frequenzumrichter 5 ist über eine Leitung 6 mit einem Motor 4 verbunden. Die Stromversorgung des Frequenzumrichters 5 erfolgt über eine Verbindungsleitung 7, die an einen Schleifring 8 an der Rotorwelle angeschlossen ist. An den Schleifring 8 ist gondelseitig über eine weitere Verbindungsleitung 9 eine Notstromversorgung 10, z. B. mit einer Batterie bzw. einem Akkumulator, angeschlossen. Schließlich ist noch eine Rotorbremse 11 vorgesehen, die zum Abbremsen und zum Festhalten des Rotors bzw. der Rotornabe 2 dient.

Alle übrigen Teile der Windkraftanlage können wie aus dem Stand der Technik an sich bekannt ausgeführt sein.

Die Steuerung der Anlage und die Sperre am Motor 4 sind so ausgelegt, dass bei einer Unterbrechung der Stromversorgung, z. B. durch einen Ausfall des Motors 4, des Schleifringes 8 oder einen Bruch der Leitungen 6, 7, 9 oder einem Defekt im Frequenzumrichter 5, welche eine Notabschaltung der Anlage mit einem möglichst raschen Abbremsen des Rotors erforderlich macht, die Rotorbremse 11 sowie die Sperre am Antrieb 4 aktiviert werden. Dadurch wird der Rotor von der Rotorbremse 11 gebremst und gleichzeitig verhindert die Sperre ein Verdrehen der Rotorblätter 3 in die Betriebsstellung. Durch die Massenträgheit der Rotorblätter 3 und die Lage des Massenschwerpunktes außerhalb ihrer Drehachse werden diese durch das Bremsmoment der Rotorbremse 11 in die Segelstellung gedreht, wobei Windkräfte sowie die Schwerkraft dieses Verdrehen der Rotorblätter 3 in die Segelstellung wenigstens zeitweise bzw. intervallweise unterstützen. Dabei ist es durch das Bremsmoment der Rotorbremse 11 nicht erforderlich zusätzliche Maßnahmen, wie ein Notstromversorgung der Antriebe 4, 5 oder eine große Pfeilung der Rotorblätter 3 vorzusehen, da durch die Rotorbremse 11 ausreichend hohe Drehmomente zum raschen Drehen der Rotorblätter 3 in die Segelstellung zur Verfügung gestellt werden. Gleichzeitig ist es durch die Notstromversorgung 10 in der Gondel 1 möglich, die Antriebe 4 zum geregelten Abschalten der Anlage bei Bedarf, z.B. bei einer Störung der elektrischen Verbindung zwischen Anlage und dem Netz, in welches sie Strom einspeist, mit Notstrom zu versorgen, soferne eine funktionierende Strom-/Steuerungsverbindung zwischen Anlagensteuerung, Frequenzumrichter 5 sowie Motor 4 besteht.

Obwohl die Rotorbremse 11 als leistungsstärkere Bremse ausgelegt sein kann, kann diese bei der Erfindung auch nur als Not- und Wartungsbremse dimensioniert sein, denn die Rotorbremse 11 muss nur im Notfall zum Einsatz kommen, das heißt bei Ausfall einer der genannten Komponenten und sofern die Rotorblätter 3 in Verbindung mit der Sperre nicht durch die Pfeilung bzw. einen außerhalb der Drehachse der Rotorblätter 3 liegenden Massenschwerpunkt der Rotorblätter 3 allein in die Segelstellung gehen und wenn der Rotor eine überkritische Drehzahl erreicht.

## Patentansprüche

1. Vorrichtung zum Abbremsen eines Rotors einer Windkraftanlage mit am Rotor drehbar gelagerten Rotorblättern (3),
mit elektrischen Einrichtungen in der Rotornabe (2), wie einem Antrieb (4, 5) zum Verdrehen der Rotorblätter (3),
mit einer mit den Rotorblättern (3) verbundenen Sperre, die bei Ausfall der Leistungsversorgung des Antriebes (4, 5) oder des Antriebes (4, 5) selbst aktivierbar ist, und welche im aktivierten Zustand ein Verdrehen der Rotorblätter (3) in die Betriebsstellung verhindert,
mit einer Rotorbremse (11) und
mit einer Steuerung, welche ausgelegt ist, die Rotorbremse (2) bei einem Ausfall der Leistungsversorgung des Antriebes (4, 5) oder des Antriebes (4, 5) selbst zu aktivieren, sodass die Rotorblätter (3) auf Grund des Bremsmomentes der Rotorbremse (11) durch ihre Massenträgheit in die Segelstellung gedreht werden.

2. Vorrichtung nach Anspruch 1, **dadurch gekennzeichnet, dass** der Massenschwerpunkt der Rotorblätter (3) außerhalb ihrer Drehachse liegt.

3. Vorrichtung nach Anspruch 1 oder 2, **dadurch gekennzeichnet, dass** die Längsachse der Rotorblätter (3) zur Drehachse der Rotorblätter (3) geneigt ist.

4. Vorrichtung nach einem der Ansprüche 1 bis 3, **gekennzeichnet durch** eine Notstromversorgung (10) der in der Rotornabe (2) angeordneten elektrischen Einrichtungen (4, 5), wobei die Notstromversorgung (10) außerhalb der Rotornabe (2) angeordnet ist.

5. Vorrichtung nach Anspruch 4, **dadurch gekennzeichnet, dass** die Notstromversorgung (10) eine, z. B. in einer Gondel oder an einem Mast der Windkraftanlage angeordnete, Batterie oder dergleichen ist, die über eine elektrische Drehverbindung, z. B. einen Schleifring (8), mit den elektrischen Einrichtungen (4, 5) verbunden ist.

6. Vorrichtung nach einem der Ansprüche 1 bis 5, **dadurch gekennzeichnet, dass** die Sperre ein kontinuierliches oder diskontinuierliches Verdrehen der Rotorblätter (3) in die Segelstellung zulässt.

7. Verfahren zum Abbremsen eines Rotors einer Windkraftanlage mit am Rotor drehbar gelagerten Rotorblättern (3), mit elektrischen Einrichtungen in der Rotornabe (2), wie einem Antrieb (4, 5) zum Verdrehen der Rotorblätter (3), und mit einer mit den Rotorblättern (3) verbundenen Sperre, die bei Ausfall der Leistungsversorgung des Antriebes (4, 5) oder des Antriebes (4, 5) selbst aktivierbar ist, und welche im aktivierten Zustand ein Verdrehen der Rotorblätter (3) in die Betriebsstellung verhindert,
**dadurch gekennzeichnet, dass** bei Ausfall der Leistungsversorgung der elektrischen Einrichtungen (4, 5) oder des Antriebes (4, 5) selbst eine Rotorbremse (11) aktiviert wird, und dass die Rotorblätter (3) auf Grund des Bremsmomentes der Rotorbremse (11) durch ihre Massenträgheit in die Segelstellung gedreht werden.

8. Verfahren nach Anspruch 7, **dadurch gekennzeichnet, dass** die Rotorbremse (11) nur bei einer Rotordrehzahl über einem vorgegebenen kritischen Wert aktiviert wird.

9. Verfahren nach Anspruch 8, **dadurch gekennzeichnet, dass** bei einem Ausfall der Leistungsversorgung des Antriebes (4, 5) oder des Antriebes (4, 5) selbst bei einer Rotordrehzahl über dem vorgegebenen kritischen Wert die Rotorbremse (11) aktiviert wird und die Rotorblätter. (3) auf Grund des Bremsmomentes der Rotorbremse (11) durch ihre Massenträgheit in die Segelstellung gedreht werden, wogegen die Rotorblätter (3) bei einer Rotordrehzahl unter dem vorgegebenen kritischen Wert bei inaktiver Rotorbremse (11) bei inaktiver Rotorbremse (11) nur mit Hilfe der Sperre durch auf die Rotorblätter (3) wirkende Wind- und/oder Schwerkräfte in die Segelstellung gedreht werden.

10. Verfahren nach einem der Ansprüche 7 bis 9, **dadurch gekennzeichnet, dass** die Antriebe (4, 5) bei einer Störung der elektrischen Verbindung der Windkraftanlage zum angeschlossenen Netz von einer außerhalb der Nabe (2) angeordneten Notstromversorgung (10) mit elektrischer Energie versorgt werden.

11. Verfahren nach einem der Ansprüche 7 bis 10, **dadurch gekennzeichnet, dass** die Rotorblätter (3) bei aktivierter Sperre durch ein auf Grund einer Pfeilung entstehendes Drehmoment in die Segelstellung gedreht werden.

12. Verfahren nach einem der Ansprüche 7 bis 11, **dadurch gekennzeichnet, dass** die aktivierte Sperre ein kontinuierliches oder diskontinuierliches Verdrehen der Rotorblätter (3) in die Segelstellung zulässt.

13. Verfahren nach einem der Ansprüche 10 bis 12, **dadurch gekennzeichnet, dass** die Versorgung der elektrischen Einrichtungen (4, 5) mit Notstrom über eine in einer Gondel (1) oder an einem Mast der Windkraftanlage angeordnete Notstromversorgung (10) erfolgt, die über eine elektrische Drehverbindung, z. B. einen Schleifring (8), mit den elektrischen Einrichtungen (4, 5) verbunden ist.

14. Verfahren nach einem der Ansprüche 10 bis 13, **dadurch gekennzeichnet, dass** als Notstromversorgung (10) eine Batterie oder dergleichen verwendet wird.

## Claims

1. Device for braking a rotor of a wind power plant having rotor blades (3) rotatably mounted on the rotor,
- having electrical devices in the rotor hub (2), such as an actuator (4, 5) for the rotation of the rotor blades (3),
- having a lock which is connected to the rotor blades (3) and can be activated in the event of a failure of the power supply to the actuator (4, 5) or of the actuator (4, 5) itself, and which in the activated state prevents the rotor blades (3) from rotating into the operating position,
- having a rotor brake (11) and
- having a controller which is designed to activate the rotor brake (2) in the event of a failure of the power supply to the actuator (4, 5) or of the actuator (4, 5) itself, so that the rotor blades (3) are rotated into the feathered position by reason of the braking moment of the rotor brake (11) by virtue of their inertia.

2. Device as claimed in claim 1, **characterised in that** the centre of gravity of the rotor blades (3) is outside their rotational axis.

3. Device as claimed in claim 1 or 2, **characterised in that** the longitudinal axis of the rotor blades (3) is inclined with respect to the rotational axis of the rotor blades (3).

4. Device as claimed in any one of claims 1 to 3, **characterised by** an emergency power supply (10) to the electrical devices (4, 5) disposed in the rotor hub (2), wherein the emergency power supply (10) is disposed outside the rotor hub (2).

5. Device as claimed in claim 4, **characterised in that** the emergency power supply (10) is a battery or the like which is disposed e.g. in a housing or on a mast of the wind power plant and which is connected to the electrical devices (4, 5) via an electrical rotary connection, e.g. a slip ring (8).

6. Device as claimed in any one of claims 1 to 5, **characterised in that** the lock permits continuous or discontinuous rotation of the rotor blades (3) into the feathered position.

7. Method of braking a rotor of a wind power plant having rotor blades (3) rotatably mounted on the rotor, having electrical devices in the rotor hub (2), such as an actuator (4, 5) for the rotation of the rotor blades (3), and having a lock which is connected to the rotor blades (3) and can be activated in the event of a failure of the power supply to the actuator (4, 5) or of the actuator (4, 5) itself, and which in the activated state prevents the rotor blades (3) from rotating into the operating position, **characterised in that** in the event of a failure of the power supply to the electrical devices (4, 5) or of the actuator (4, 5) itself, a rotor brake (11) is activated, and that the rotor blades (3) are rotated into the feathered position by reason of the braking moment of the rotor brake (11) by virtue of their inertia.

8. Method as claimed in claim 7, **characterised in that** the rotor brake (11) is only activated at a rotor rotational speed above a specified critical value.

9. Method as claimed in claim 8, **characterised in that** in the event of a failure of the power supply to the actuator (4, 5) or of the actuator (4, 5) itself at a rotor rotational speed above the specified critical value the rotor brake (11) is activated and the rotor blades (3) are rotated into the feathered position by reason of the braking moment of the rotor brake (11) by virtue of their inertia, whereas at a rotor rotational speed below the specified critical value when the rotor brake (11) is inactive when the rotor brake (11) is inactive [sic] the rotor blades (3) are rotated into the feathered position solely with the aid of the lock by means of wind and/or gravitational forces acting upon the rotor blades (3).

10. Method as claimed in any one of claims 7 to 9, **characterised in that** in the event of a failure in the electrical connection of the wind power plant to the connected grid the actuators (4, 5) are supplied with electrical energy by means of an emergency power supply (10) disposed outside the hub (2).

11. Method as claimed in any one of claims 7 to 10, **characterised in that** in the event that the lock is activated the rotor blades (3) are rotated into the feathered position by means of torque produced by reason of a sweep.

12. Method as claimed in any one of claims 7 to 11, **characterised in that** the activated lock permits continuous or discontinuous rotation of the rotor blades (3) into the feathered position.

13. Method as claimed in any one of claims 10 to 12, **characterised in that** the electrical devices (4, 5) are supplied with emergency power via an emergency power supply (10) which is disposed in a housing (1) or on a mast of the wind power plant and which is connected to the electrical devices (4, 5) via an electrical rotary connection, e.g. a slip ring (8).

14. Method as claimed in any one of claims 10 to 13, **characterised in that** a battery or the like is used as the emergency power supply (10).

## Revendications

1. Dispositif permettant de faire freiner le rotor d'une éolienne pourvue de pales (3) montées rotatives sur le rotor,
- de dispositifs électriques placés dans le moyeu (2) du rotor tels qu'un mécanisme d'entraînement (4, 5) destiné à faire tourner les pales (3) du rotor,
- d'un dispositif de verrouillage relié aux pales (3) du rotor, qui peut être activé en cas de défaillance de l'alimentation électrique du mécanisme d'entraînement (4, 5) ou du mécanisme d'entraînement (4, 5) lui-même, et qui empêche à l'état activé une rotation des pales (3) du rotor en position de fonctionnement,
- d'un frein (11) de rotor et
- d'une commande, conçue pour activer le frein (2) de rotor en cas de défaillance de l'alimentation électrique du mécanisme d'entraînement (4, 5) ou du mécanisme d'entraînement (4, 5) lui-même, de telle sorte que les pales (3) du rotor sont alors tournées par leur inertie dans la position de mise en drapeau en raison du couple de freinage du frein (11) de rotor.

2. Dispositif selon la revendication 1, **caractérisé par le fait que** le centre de gravité de masse des pales (3) du rotor se trouve en dehors de l'axe de rotation.

3. Dispositif selon la revendication 1 ou 2, **caractérisé par le fait que** l'axe longitudinal des pales (3) du rotor est incliné vers l'axe de rotation des pales (3) du rotor.

4. Dispositif selon l'une des revendications 1 à 3, **caractérisé par** une alimentation de secours (10) des installations (4, 5) électriques disposées dans le moyeu (2) du rotor, l'alimentation de secours (10) étant disposée en dehors du moyeu (2) du rotor.

5. Dispositif selon la revendication 4, **caractérisé par le fait que** l'alimentation de secours (10) est une batterie ou similaire, disposée par ex. dans une nacelle ou au niveau d'un pylône de l'éolienne, qui est reliée aux installations électriques (4, 5) par une liaison rotative électrique, par ex. une bague collectrice (8).

6. Dispositif selon l'une des revendications 1 à 5, **caractérisé par le fait que** le dispositif de verrouillage autorise une rotation continue ou discontinue des pales (3) du rotor dans la position de mise en drapeau.

7. Procédé permettant de faire freiner le rotor d'une éolienne pourvue de pales (3) montées rotatives sur le rotor, d'installations électriques placées dans le moyeu (2) du rotor telles qu'un mécanisme d'entraînement (4, 5) destiné à faire tourner les pales (3) du rotor, et d'un dispositif de verrouillage relié aux pales (3) du rotor, qui peut être activé en cas de défaillance de l'alimentation électrique du mécanisme d'entraînement (4, 5) ou du mécanisme d'entraînement (4, 5) lui-même, et qui empêche à l'état activé une rotation des pales (3) du rotor en position de fonctionnement,
**caractérisé par le fait que**
un frein (11) de rotor est activé en cas de défaillance de l'alimentation électrique des installations électriques (4, 5) ou du mécanisme d'entraînement (4, 5) lui-même, et que
les pales (3) du rotor sont alors tournées par leur inertie dans la position de mise en drapeau en raison du couple de freinage du frein (11) de rotor.

8. Procédé selon la revendication 7, **caractérisé par le fait que** le frein (11) de rotor n'est activé qu'en cas de vitesse de rotation du rotor supérieure à une valeur critique prédéterminée.

9. Procédé selon la revendication 8, **caractérisé par le fait que**
le frein (11) de rotor est activé en cas de défaillance de l'alimentation électrique du mécanisme d'entraînement (4, 5) ou du mécanisme d'entraînement (4, 5) lui-même en cas de vitesse de rotation du rotor supérieure à une valeur critique prédéterminée et
les pales (3) du rotor sont alors tournées par leur inertie dans la position de mise en drapeau en raison du couple de freinage du frein (11) de rotor, tandis que les pales (3) du rotor, en cas de vitesse de rotation du rotor inférieure à la valeur critique prédéterminée avec le frein (11) de rotor inactif, ne peuvent être tournées dans la position de mise en drapeau qu'à l'aide du dispositif de verrouillage par la force du vent ou la force d'inertie agissant sur les pales (3) du rotor.

10. Procédé selon une des revendications 7 à 9, **caractérisé par le fait que** les mécanismes d'entraînement (4, 5) sont alimentés en énergie électrique au réseau raccordé par une alimentation de secours (10) disposée en dehors du moyeu (2) en cas de défaillance de la connexion électrique de l'éolienne.

11. Procédé selon une des revendications 7 à 10, **caractérisé par le fait que** les pales (3) du rotor sont tournées, en cas de dispositif de verrouillage activé, dans la position de mise en drapeau en raison d'un couple de freinage résultant d'une flèche.

12. Procédé selon une des revendications 7 à 11, **caractérisé par le fait que** le dispositif de verrouillage activé autorise une rotation continue ou discontinue des pales (3) du rotor dans la position de mise en drapeau.

13. Procédé selon une des revendications 10 à 12, **caractérisé par le fait que** l'alimentation des installations électriques (4, 5) en courant de secours (4) est effectuée par une alimentation de secours (10) disposée dans une nacelle (1) ou au niveau d'un pylône de l'éolienne, qui est reliée aux installations électriques (4, 5) par une liaison rotative électrique, par ex. une bague collectrice (8) .

14. Procédé selon une des revendications 10 à 13, **caractérisé par le fait qu'**une batterie ou similaire est utilisée comme alimentation électrique de secours (10).
